(19) Europäisches Patentamt
European Patent Office
Office européen des brevets

(11) **EP 2 051 881 B1**

(12) **EUROPÄISCHE PATENTSCHRIFT**

(45) Veröffentlichungstag und Bekanntmachung des Hinweises auf die Patenterteilung:
**18.09.2013 Patentblatt 2013/38**

(21) Anmeldenummer: **07765392.1**

(22) Anmeldetag: **13.06.2007**

(51) Int Cl.:
**B60R 21/0136** *(2006.01)*    **B60R 21/00** *(2006.01)*

(86) Internationale Anmeldenummer:
**PCT/EP2007/055821**

(87) Internationale Veröffentlichungsnummer:
**WO 2008/017535 (14.02.2008 Gazette 2008/07)**

(54) **VORRICHTUNG, VERFAHREN UND STEUERGERÄT ZUR SEITENAUFPRALLERKENNUNG UND DRUCKSENSOR**

DEVICE, METHOD AND CONTROL UNIT FOR IDENTIFYING A SIDE IMPACT, AND PRESSURE SENSOR

DISPOSITIF, PROCÉDÉ ET APPAREIL DE COMMANDE POUR LA DÉTECTION DE CHOCS LATÉRAUX ET CAPTEUR DE PRESSION

(84) Benannte Vertragsstaaten:
**CZ DE ES FR GB**

(30) Priorität: **08.08.2006 DE 102006036960**

(43) Veröffentlichungstag der Anmeldung:
**29.04.2009 Patentblatt 2009/18**

(73) Patentinhaber: **Robert Bosch GmbH**
**70442 Stuttgart (DE)**

(72) Erfinder:
• **ADAM, Boris**
**71126 Gaeufelden (DE)**
• **WELLHOEFER, Matthias**
**70499 Stuttgart (DE)**
• **FRESE, Volker**
**71701 Schwieberdingen (DE)**

(56) Entgegenhaltungen:
WO-A-03/078954    WO-A-2005/012924
DE-A1- 10 308 652    DE-A1-102005 041 913
US-A- 5 758 301

EP 2 051 881 B1

**Beschreibung**

Stand der Technik

Die Erfindung betrifft eine Vorrichtung, ein Verfahren, ein Steuergerät zur Seitenaufprallerkennung und einen Drucksensor nach der Gattung der unabhängigen Patentansprüche.

Aus DE 102 10 925 A1 ist bereits ein Verfahren zur Überprüfung der Funktionsfähigkeit eines Drucksensors bekannt. Dabei werden die Messwerte des zu prüfenden Drucksensors mit Messwerten eines weiteren Drucksensors über einen definierten Beobachtungszeitraum miteinander verglichen. Der Drucksensor wird als defekt erkannt, wenn seine Messwerte über ein vorgegebenes Maß von den Messwerten des mindestens einen weiteren Drucksensors abweichen.

Aus WO 2005/012924 A ist ein Aufprallsensor bzw. ein Verfahren zum Testen des Aufprallsensors vorgeschlagen worden. Der Aufprallsensor weist ein Sensorelement und einen Filter zur Filterung der Signale des Sensorelements auf. Dieser Filter ist vorzugsweise ein Tiefpassfilter. Mittels eines Testsignals wird der Filter getestet, um bei einer Abweichung der Filtercharakteristik von einem vorgegebenen Sollwert die Auswirkungen der Abweichungen auf Auslösevorgang durch einen nachgeschalteten Softwarefilter oder eine geänderte Parametrierung des Auslösealgorithmus zu korrigieren.

Offenbarung der Erfindung

Die erfindungsgemäße Vorrichtung, das erfindungsgemäße Verfahren bzw. das erfindungsgemäße Steuergerät zur Seitenaufprallerkennung in einem Fahrzeug und der erfindungsgemäße Drucksensor mit den Merkmalen des unabhängigen Patentanspruchs haben dem gegenüber den Vorteil, dass der weitere Drucksensor vermieden werden kann, indem das Signal der zu testenden Drucksensorik überabgestastet und dann gefiltert wird. Das so entstehende Testsignal wird mit einem Referenzwert verglichen und in Abhängigkeit von diesem Vergleich auf die Funktionsfähigkeit der wenigstens einen Drucksensorik erkannt. Vorteilhafter Weise kann durch die Überabstastung und die nachfolgende Filterung eine hohe Auflösung erzeugt werden, sodass die Beschleunigungsempfindlichkeit des

Drucksensors genutzt werden kann. Eine vorzugsweise Druckmembran als Sensorelement hat nämlich immer eine Massebelegung und daher eine Beschleunigungsempfindlichkeit. Diese Beschleunigungsempfindlichkeit wird erfindungsgemäß anhand der im Fahrbetrieb des Fahrzeugs entstehenden Beschleunigung genutzt, um die Bewegung der Membran und den ganzen folgenden Signalpfad zu prüfen. Die Massebelegung des Drucksensors sollte jedoch möglichst gering sein, denn das Drucksignal soll im Crashfall nicht beeinträchtigt sein. Beispielsweise führen Massebelegungen der in Personenschutzsystemen verwendeten Drucksensoren zur Beschleunigungsempfindlichkeiten von 3 - 10 mbar/100g. Um eine Beschleunigung von 0,1g zu erkennen, benötigt man eine Auflösung von 0,003 - 0,01 mbar. Mit Hilfe der erfindungsgemäßen Testeinrichtung ist es möglich, diese Auflösung zu erzeugen und zwar für weniger dynamische Signale. Die im normalen Fahrbetrieb auftretenden Beschleunigungen stehen eher etwas länger als im Crashfall an.

Ein Beschleunigungsvorgang von 0 -100 km/h in 20s ergibt eine Beschleunigung von 0,1 - 0,2g. Eine Vollbremsung von 100 km/h auf 50m dauert ca. 3,6s mit einer negativen Beschleunigung von -0,8g.

Eine Auflösung von 0,1g in einem Frequenzbereich von 0,1 - 10Hz ist durch die erfindungsgemäße Vorrichtung möglich. Je nach Fahrdynamik würde man dieses Signal mit dem anderen Drucksensor der gegenüber liegt oder mit den zentralen Beschleunigungssensoren vergleichen.

Die erfindungsgemäße Vorrichtung kann wenigstens einen Drucksensor und ein Steuergerät, das das Signal des Drucksensors auswertet, aufweisen. Es ist jedoch möglich, dass die Vorrichtung eine kompakte Einheit bildet und in der Fahrzeugseite eingebaut ist. Weitere Drucksensoren in den Seitenteilen können dann ebenfalls als Vorrichtung eingebaut sein, oder sie sind mit der Vorrichtung verbunden, so dass allein die Vorrichtung die Auswertung übernimmt. Für die Testeinrichtung gilt dies ebenso.

Der Drucksensor erzeugt mit seinem Sensorelement das Signal, das dem Sigma-Delta-Wandler zugeführt wird. Damit wird dann ein Einbitmesssignal erzeugt. Weiterhin weist der Drucksensor einen Filter auf, der zur Erhöhung der Auflösung des Einbitmesssignals führt und damit das Testsignal erzeugt. Dieses Signal kann dann-zu einem Steuergerät zur Ansteuerung von Personenschutzmitteln übertragen werden.

Das erfindungsgemäße Verfahren läuft auf dem Steuergerät ab. Die Schnittstelle kann hardwaremäßig oder softwaremäßig ausgeführt sein.

Durch die in den abhängigen Ansprüchen aufgeführten Maßnahmen und Weiterbildungen sind vorteilhafte Verbesserungen der im unabhängigen Patentanspruch angegebenen Vorrichtung zur Seitenaufprallerkennung in einem Fahrzeug möglich.

Besonders vorteilhaft ist, dass die erfindungsgemäße Testeinrichtung zur Überabstastung und Filterung wenigstens einen SIGMA- DELTA- Wandler aufweist. Die SIGMA- DELTA- Wandler- Technologie ist besonders geeignet und einfach implementierbar.

Vorteilhafter Weise wird der Referenzwert, mit dem das Testsignal verglichen wird, in einem Speicher vorgehalten, sodass der Referenzwert voreingestellt ist. Alternativ ist es möglich, dass der Referenzwert auch durch eine Sensorik erzeugt wird.

Es ist im Weiteren vorteilhaft, dass die Drucksensorik eine Messbrücke zur Erzeugung des Signals aufweist. Damit ist eine besonders sichere und mit einem großen Signalhub versehene Signalerzeugung möglich.

vorteilhafter Weise ist der SIGMA-DELTA-Wandler zur Erzeugung eines Messsignals konfiguriert, wobei eine Tiefpass und/ oder Bandpassfilterung für das Ein-Bit-Messsignal vorgesehen ist.

Zur Erzeugung des Signals ist vorteilhafter Weise eine Tiefpassfilterung vorgesehen und dann zur Erzeugung des Testsignals eine weitere Bandpassfilterung.

Zeichnung

Ausführungsbeispiele der Erfindung sind in der Zeichnung dargestellt und werden in der nachfolgenden Beschreibung näher erläutert.

Figur 1                zeigt eine Konfiguration der erfindungsgemäßen Vorrichtung im Fahrzeug,

Figur 2 und Figur 3    verschiedene Beschleunigungsrichtungen,

Figur 4                ein erstes Blockschaltbild,

Figur 5                ein zweites Blockschaltbild,

Figur 6                ein drittes Blockschaltbild,

Figur 7                ein viertes Blockschaltbild,

Figur 8                ein Schaltbild und

Figur 9                ein Flussdiagramm.

Beschreibung

Es wird eine Drucksensorik zur Aufprallsensierung von Seitenaufprallen bei Fahrzeugen verwendet, indem die Drucksensorik in Seitenteilen des Fahrzeugs angeordnet ist und auf einen adiabatischen Druckanstieg, hervorgerufen durch einen Aufprall, ein Signal sehr schnell erzeugt. Um eine Funktion der Drucksensorik über einen langen Zeitraum zu gewährleisten, ist eine kontinuierliche Überwachung der Funktionsfähigkeit der Drucksensorik notwendig. Dazu wird erfindungsgemäß eine Testeinrichtung vorgeschlagen, die eine Überabtastung und eine nachfolgende Filterung des durch die Drucksensorik erzeugten Signals vornimmt. Insbesondere ist dafür die SIGMA- DELTA- Wandler- Technologie geeignet.

Ein Analog- Digital- Wandler nach dem SIGMA- DELTA- Prinzip wandelt ein analoges Signal in zwei Schritten in ein digitales Signal, mit einer vorgegebenen Wortbreite B. In der ersten Stufe, Modulator genannt, erfolgt die Abtastung des analogen Signals der Bandbreite $f_B$ mit einer hohen Überabtastrate $OSR = \dfrac{f_A}{2f_B}$, wobei $f_A$ die Abtastfrequenz ist. Im Modulator wird die Differenz aus dem Eingangs- und dem Ausgangssignal über einer oder mehreren Rückkoppelschleifen gebildet und integriert. Das Integrationsergebnis wird durch einen Quantisierer bewertet. Bei genügend hoher Überabtastung tritt zwischen zwei Abtastzeitpunkten nur eine geringe Signaländerung auf, sodass die Verwendung eines einfachen Binärquantisierers, also eines Ein- Bit- Wandlers möglich wird. Die entstehende serielle Bitfolge stellt ein pulsdichtemoduliertes Signal mit der hohen Abtastfrequenz $f_A$ dar. Jeweils aufeinander folgende Bits dieses Datenstroms enthalten die Information, die nach dem Nyquist- Kriterium erforderlich ist, um ein Signal der Frequenz $f_B$ sicher zu beschreiben. Diese serielle Bitfolge bildet das Übergabesignal zur zweiten Baugruppe, einem Digitalfilter. Dessen Aufgabe ist die Unterdrückung der entstandenen hochfrequenten Rauschanteile und die Umwandlung des seriellen Datenstroms in die B- Bit- breiten Digitalworte, die mit der Frequenz der doppelten Bandbreite des Eingangssignals $f_N$ = 2 · $f_W$ (Nyquist- Frequenz) ausgegeben werden.

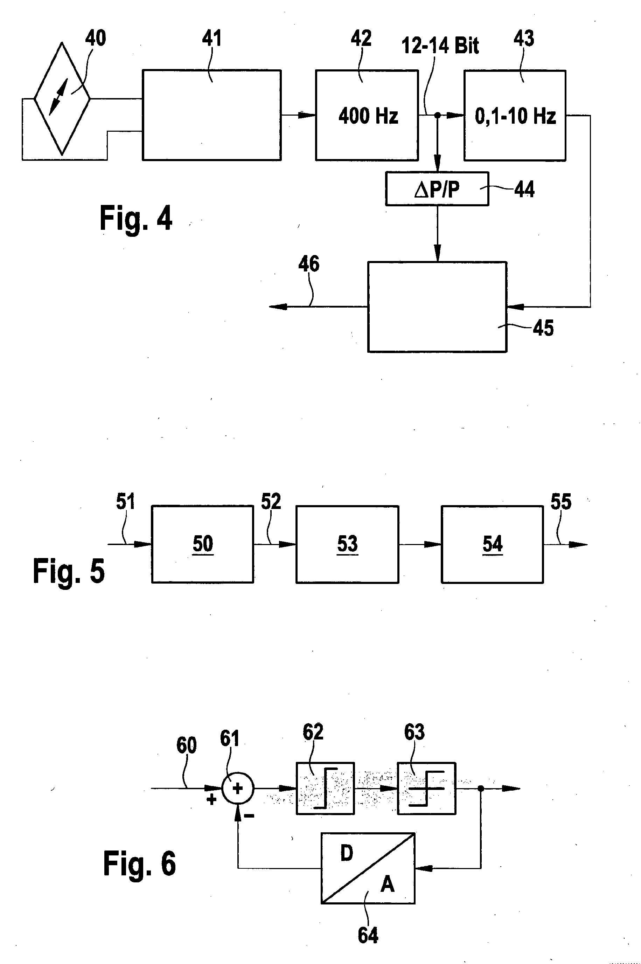

Figur 5 zeigt in einem ersten Blockschaltbild die Baugruppen eines SIGMA-DELTA-Wandler. In einen Modulator 50 wird ein Analog-Eingangssignal mit der Frequenz $f_B$ 51 eingegeben. Daraus formt, wie oben angegeben, der Modulator 50 eine serielle Bitfolge mit der hohen Abtastfrequenz $f_A$, bezeichnet mit dem Bezugszeichen 52. Im Block 53 erfolgt die digitale Filterung, die die hochfrequenten Rauschanteile unterdrückt und den seriellen Datenstrom in die entsprechenden Digitalworte mit der Frequenz der doppelten Bandbreite des Eingangssignals ausgibt, sodass dann im Block 54 der Dezimierer diese Digitalworte ausgibt.

Figur 6 zeigt in einem weiteren Blockschaltbild das Prinzip eines SIGMA- DELTA- Modulators, wobei das analoge Signal 60 auf einen Addierer 61 trifft, bei dem vom analogen Signal 60 eine rückgekoppeltes Signal aus einem Digital- Analog- Wandler 64 abgezogen wird. Das so entstehende Signal wird einem Integrierer 62 zugeführt und dann einem Quantisierer 63. Der Digital- Analog- Wandler 64 ist als ein Einbit- Wandler ausgeführt. Das ins analoge rückgewandelte Ausgangssignal repräsentiert entweder die maximale Eingangsspannung oder die minimale Eingangsspannung und gibt damit gleichzeitig den Eingangsspannungsbereich des Wandlers vor. Je größer das Eingangssignal ist desto öfter gibt der Komparator eine Eins aus. Bei niedrigem Eingangspegel überwiegt die Anzahl der ausgegebenen Nullwerte. Liegt die Einsgangsspannung in der Mitte zwischen der Maximal- und Minimalspannung, dann wechselt der Ausgang ständig zwischen Null und Eins. Aufgrund der integrierenden Modulatorfunktion ist die Höhe der Eingangsspannung im Mittelwert des ausgegebenen seriellen Bitstroms enthalten. Dieser stellt einen relativen Wert in Bezug auf die beiden Grenzwerte der Maximal- und Minimalspannung dar. Die Konstanz und die Genauigkeit des Ausgangspegels des Digital- Analog- Wandlers 64 entscheiden somit über die absolute Genauigkeit des gebildeten Mittelwerts.

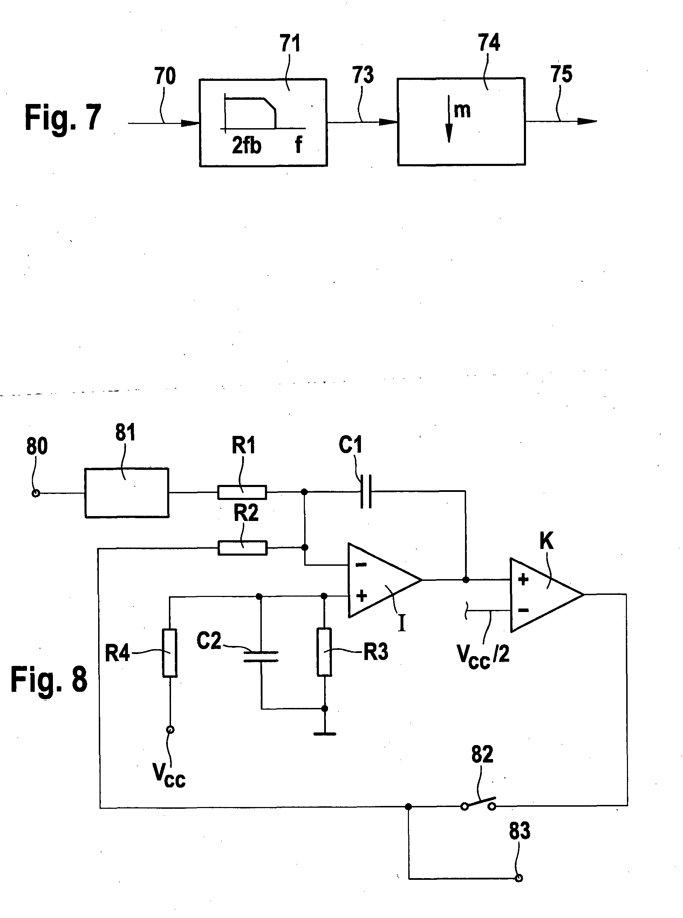

Figur 7 zeigt einen Digitalteil des SIGMA- DELTA- Wandler, der auf einem Tiefpassfilter 71 zur Unterdrückung des hochfrequenten Anteils im Quantisierungsrauschen und einem Dezimierer 74 zur Reduktion der Abtastfrequenz des Ausgangssignals auf die minimal doppelte Bandbreite des Eingangssignals. Dabei wird der serielle Bitstrom des Modulatorausgangs in B- Bitbreite Digitalworte, wie sie in gewöhnlichen Analog- Digital- Wandlern gebildet werden, umgewandelt. Im einfachsten Fall kann das Tiefpassfilter 71 durch die Bildung des gleitenden Mittelwerts über dem Ausgangssignal des Modulators beschrieben werden. Die Reduktion der Abtastrate entspricht der Entnahme jedes m-ten Wertes des Filterausgangssignals. Dies ist dann das Signal 75. Die mögliche Größe der Breite des Datenworts resultiert aus dem im Modulator erreichbaren Signalrauschabstand sowie im Digitalteil eventuell verursachter zusätzlicher Rauschanteile.

Figur 8 zeigt ein Realisierungsbeispiel eines SIGMA-DELTA-Wandler. Am Eingangsschluss 80 wird das analoge Eingangssignal eingeschleust. Dann folgt zur Anpassung ein Impedanzwandler 81, der von einem Vorwiderstand R1 gefolgt wird. Der Widerstand R1 ist an einen Kondensator C1 an den negativen Eingang eines Komparators I und an einen Widerstand R2 angeschlossen. Eine vorgegebene Spannung VCC ist über einen Widerstand R4 an den positiven Eingang des Operationsverstärkers I angeschlossen. An diesem positiven Eingang ist weiterhin eine Parallelschaltung aus einem Kondensator C2 und einem Widerstand R3 angeschlossen, die auf der anderen Seite gegen Masse geschaltet sind. Der O-perationsverstärker I ist durch diese Beschaltung als Integrator geschaltet. Auf der anderen Seite ist der Widerstand R2 an einen Schalter 82 und einen Ausgang 83, der zum Digitalfilter führt, angeschlossen. Der Schalter 82 ist auf der anderen Seite mit dem Ausgang eines Komparators K verbunden, dessen positiver Eingang mit dem Kondensator C1 und dem Ausgang des Operationsverstärkers I verbunden ist. Am negativen Eingang des Komparators K ist der feste Spannungswert VCC halbe angeschlossen. Damit liegt durch den Komparator K und dem Schalter 82 ein Einbit-Quantisierer vor.

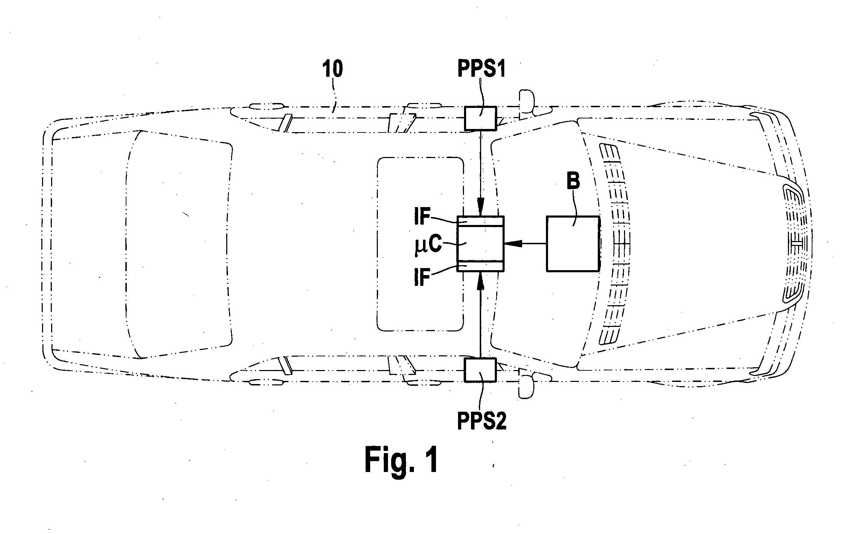

Figur 1 zeigt eine Konfiguration der erfindungsgemäßen Vorrichtung. Ein Mikrocontroller µC als Auswerteschaltung erhält über eine Schnittstelle IF Signale von Drucksensoriken PPS1 und PPS2, die jeweils an gegenüber liegenden Seitenteilen des Fahrzeugs angeordnet sind, um bei einem Aufprall einen adiabatischen Druckanstieg im Seitenteil festzustellen. Die Schnittstelle IF ist vorliegend als integrierter Schaltkreis ausgebildet. Sie kann alternativ aus einzelnen Bausteinen oder als Softwaremodul auf dem Mikrocontroller µC ausgebildet sein. Die Schnittstelle IF stellt also die Signale von der Drucksensorik bereit.

Das Fahrzeug 10 weist weiterhin eine Beschleunigungssensorik B auf, die ebenfalls ihr Signal an den Mikrocontroller µC liefert. Der Mikrocontroller µC erhält von den Drucksensoriken PPS1 und PPS2 das durch den Sigma-Delta-Wandler erzeugte Testsignal. Das heißt der Sigma-Delta-Wandler ist im Drucksensor PPS1 bzw. PPS2 angeordnet. Alternativ ist es möglich, dass dieser Sigma-Delta-Wandler auch in einem Steuergerät angeordnet ist, in dem sich der Mikrocontroller µC befindet. Die Beschleunigungssensorik B dient zu Vergleichszwecken, wenn kein abgespeicherter Wert verwendet wird. Die Beschleunigungssensorik B kann sich in einem Steuergerät befinden oder auch außerhalb in einer Sensorbox oder verteilt im Fahrzeug 10.

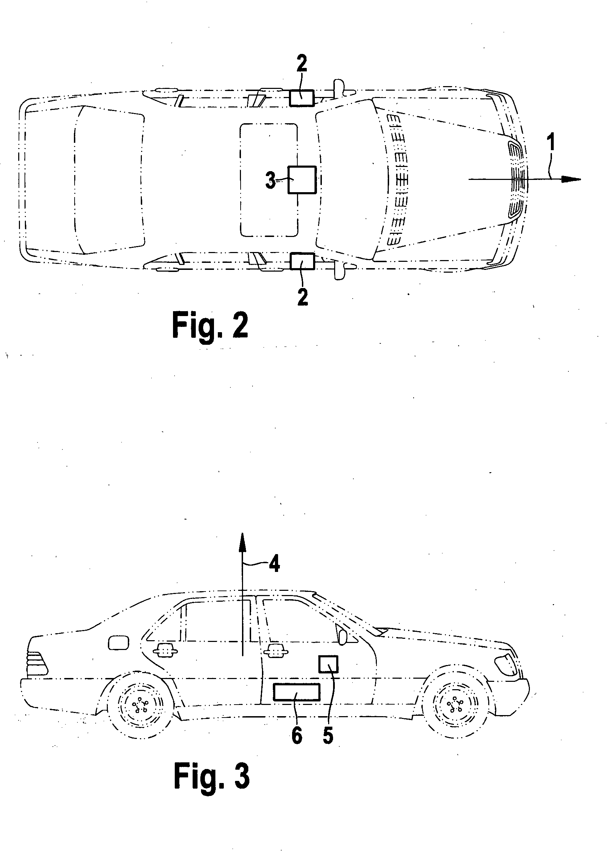

Figur 2 und Figur 3 stellen mögliche Anordnungen der erfindungsgemäßen Vorrichtung dar. In Figur 2 zeigen die Flächen Normalvektoren 1 der Druckmembran in die Fahrtrichtung 1. Die durch die Fahrdynamik erzeugte Beschleunigung wird mit Hilfe der Beschleunigungsempfindlichkeit und der Drucksensoren 2 detektiert und die Signale der Drucksensoren werden entweder gegeneinander oder gegen Beschleunigungssensoren im Airbagsteuergerät 3 verglichen. Figur 3 zeigt eine Anordnung zur Detektion von Signalen in Z-Richtung 4, wie sie bei Schlechtwegstrecken entstehen. Wiederum wird das Signal der Beschleunigungsempfindlichkeit der Drucksensoren 5 miteinander oder mit einer Beschleunigungsmessung im Airbagsteuergerät 6 verglichen. Für diese Anordnung müsste der Bandpassfilter angepasst werden, da diese Signale eine höhere Dynamik und Amplitude aufweisen.

Falls vorhanden können auch die Signale für das Bremsensteuergerät (ESP) verwendet werden, da diese schon hochaufgelöst vorhanden sind (10-50 mg).

Figur 4 zeigt einen möglichen Aufbau des Drucksensors in Funktionsblöcken aufgeteilt. Das ursprüngliche Drucksignal wird mit Hilfe einer Messbrücke 40 aufgenommen. Ein Sigma-Delta-Wandler 41 wandelt das entstehende Spannungssignal in ein hochfrequentes Einbit-Messsignal um. Durch die nachfolgende Tiefpassfilterung 42 wird die Auflösung erhöht. Nach der 400Hz Tiefpassfilterung hat das Signal eine Auflösung von 12 - 14 Bit, was einer Auflösung von ca. 0,1 - 0,5 mbar entspricht. Dieses Signal wird zur Berechnung des Nutzsignals $\frac{\Delta P}{P}$ herangezogen. Eine weitere Bandpassfilterung 43 erhöht die Auflösung, sodass die Auflösung von 0,003 - 0,01 mbar erreicht wird. Da durch den Bandpass 43 auch der Gleichanteil des Signals, das ist der umgebende Absolutdruck, entfernt wird, ist nur noch eine geringe Darstellungsbreite des Testsignals notwendig, die hier beispielsweise mit 4 Bit angegeben wird. Das Nutzsignal ist hier mit dem Bezugszeichen 44 bezeichnet.

Eine Logikschaltung 45 mit einem Interface zum Airbagsteuergerät wird dann im Normalfall abwechselnd Nutzsignal und Testsignal über die Leitung 46 an das Steuergerät übermittelt. Das Airbagsteuergerät vergleicht nun entweder die Signale der beiden Drucksensoren miteinander oder mit der im Steuergerät gemessenen Beschleunigung und kann somit über die gesamte Signalkette des Drucksensors das Signal plausibilisieren.

Im Crashfall, also dem Überschreiten einer Schwelle durch das Nutzsignal wird dann nur noch das Nutzsignal übertragen.

Das Drehen der Membran in Fahrtrichtung oder in Z-Richtung bringt den Vorteil, dass die beim Seitencrash auftretenden Beschleunigungen nicht mehr senkrecht zur Membran wirken und damit die Beeinträchtigung des Crashsignals 44 durch die Beschleunigungsempfindlichkeit der Membran deutlich verringert wird.

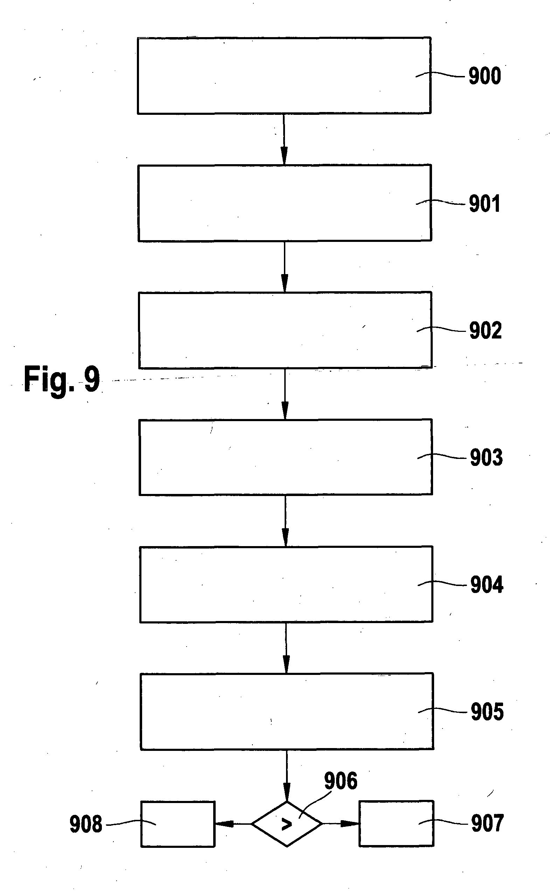

Figur 9 zeigt ein Flussdiagramm des erfindungsgemäßen Verfahrens auf der erfindungsgemäßen Vorrichtung. Im Verfahrensschritt 900 wird mittels der Messbrücke das Drucksignal erzeugt. In Verfahrensschritt 901 erfolgt durch den Sigma-Delta-Wandler die Erzeugung eines hochfrequenten Einbit-Datenstroms, der in Verfahrensschritt 902 einer Tiefpassfilterung zur Erhöhung der Auflösung unterzogen wird. Nach der Tiefpassfilterung liegt dann das Nutzsignal vor. Eine weitere Bandpassfilterung in Verfahrensschritt 903 erzeugt das Testsignal, sodass dann abwechselnd im Verfahrensschritt 904 das Nutzsignal und das Testsignal zum Steuergerät übertragen werden können. Im Steuergerät erfolgt eine Bereitstellung dieses Signals durch die Schnittstelle IF. Im Steuergerät findet dann in Verfahrensschritt 905 ein Vergleich statt, um in Verfahrensschritt 906 zu testen, ob der Vergleich zu einem Wert führt, der über einem vorgegebenen Referenzwert liegt. Ist das der Fall, so wird in Verfahrensschritt 907 eine Warnung ausgegeben, beispielsweise durch die Ansteuerung einer Anzeige, wie einer Leuchte. Ist dies nicht der Fall, dann wird in Verfahrensschritt 908 das Verfahren beendet. Anstatt einer Leuchte kann auch auf einem Display in einem Fahrzeug eine entsprechende Anzeige erfolgen.

**Patentansprüche**

1. Vorrichtung zur Seitenaufprallerkennung in einem Fahrzeug (10) mit:

    - wenigstens einer Drucksensorik (PPS1, PPS2) in wenigstens einem Seitenteil des Fahrzeugs, wobei die wenigstens eine Drucksensorik (PPS1, PPS2) ein Signal erzeugt
    - wenigstens einer Auswerteschaltung ($\mu$C), die in Abhängigkeit von dem Signal einen Seitenaufprall erkennt
    - wenigstens einer Testeinrichtung für die wenigstens eine Drucksensorik (PPS1, PPS2), **dadurch gekennzeichnet, dass** die wenigstens eine Testeinrichtung derart konfiguriert ist, dass die wenigstens eine Testeinrichtung das Signal überabtastet und dann zur Erzeugung eines Testsignals filtert, wobei die Testeinrichtung das Testsignal mit einem Referenzwert vergleicht und in Abhängigkeit von diesem Vergleich auf eine Funktionsfähigkeit der wenigstens einen Drucksensorik (PPS1, PPS2) erkennt, dass das Signal der Drucksensorik (PPS1, PPS2) mittels einer Beschleunigungsempfindlichkeit dieser Drucksensorik (PPS1, PPS2) anhand von einer im Fahrbetrieb entstehenden Beschleunigung erzeugt wird.

2. Vorrichtung nach Anspruch 1, **dadurch gekennzeichnet, dass** die Testeinrichtung zur Überabtastung und Filterung wenigstens einen Sigma-Delta-Wandler aufweist.

3. Vorrichtung nach Anspruch 1 oder 2, **dadurch gekennzeichnet, dass** ein Speicher vorgesehen ist, in dem der Referenzwert abgelegt ist.

**4.** Vorrichtung nach Anspruch 1 oder 2, **dadurch gekennzeichnet, dass** eine weitere Sensorik vorgesehen ist, die den Referenzwert erzeugt.

**5.** Vorrichtung nach einem der vorherigen Ansprüche, **dadurch gekennzeichnet, dass** die wenigstens eine Drucksensorik (PPS1, PPS2) eine Messbrücke zur Erzeugung des Signals aufweist.

**6.** Vorrichtung nach Anspruch 2, 3, 4 oder 5, **dadurch gekennzeichnet, dass** der Sigma-Delta-Wandler zur Erzeugung eines Einbit-Messsignals konfiguriert ist, wobei eine Tiefpass- und/ oder Bandpassfilterung für das Einbit-Messsignal vorgesehen ist.

**7.** Vorrichtung nach Anspruch 6, **dadurch gekennzeichnet, dass** nach der Tiefpassfilterung das Signal und nach der Bandpassfilterung das Testsignal vorliegt.

**8.** Drucksensor mit:

- einem Sensorelement , das zur Erzeugung eines Signals verwendet wird, gekennzeichnet ist
- einem Sigma- Delta- Wandler, der anhand des Signals ein Einbitmesssignal erzeugt
- einem Tiefpass und einem Bandpass, die das Einbitmesssignal zur Erzeugung eines Testsignals filtern
- einem Senderbaustein, der das Testsignal aussendet
- einer Beschleunigungsempfindlichkeit des Sensorelements zur Erzeugung des Signals anhand von einer im Fahrbetrieb entstehenden Beschleunigung.

**9.** Verfahren zur Erkennung einer Funktionsfähigkeit der Drucksensorik (PPS1, PPS2) für ein Fahrzeug (10) mit folgenden kennzeichnenden Verfahrensschritten:

- Bereitstellen eines Signals, das durch die Drucksensorik (PPS1, PPS2) anhand einer Beschleunigungsempfindlichkeit anhand von einer im Fahrbetrieb entstehenden Beschleunigung erzeugt wurde
- Erkennung des Seitenaufpralls in Abhängigkeit von dem Signal
- Überabtastung des Signals und anschließende Filterung zur Erzeugung eines Testsignals, Vergleichen des Testsignals mit einem Referenzwert und Erkennen auf eine Funktionsfähigkeit der Drucksensorik (PPS1, PPS2) in Abhängigkeit von diesem Vergleich.

**10.** Steuergerät zur Seitenaufprallerkennung für ein Fahrzeug (10) mit:

- einer Schnittstelle (IF) zur Bereitstellung eines Signals wenigstens einer  Drucksensorik (PPS1, PPS2)
- wenigstens einer Auswerteschaltung ($\mu$C), die in Abhängigkeit von dem Signal einen Seitenaufprall erkennt
- wenigstens einer Testeinrichtung für die wenigstens eine Drucksensorik (PPS1, PPS2), **dadurch gekennzeichnet, dass** die wenigstens eine Testeinrichtung derart konfiguriert ist, dass die wenigstens eine Testeinrichtung das Signal überabtastet und dann zur Erzeugung eines Testsignals filtert, wobei die Testeinrichtung das Testsignal mit einem Referenzwert vergleicht und in Abhängigkeit von diesem Vergleich auf eine Funktionsfähigkeit der wenigstens einen Drucksensorik (PPS1, PPS2) erkennt, dass das Signal der Drucksensorik (PPS1, PPS2) mittels einer Beschleunigungsempfindlichkeit dieser Drucksensorik (PPS1, PPS2) anhand von einer im Fahrbetrieb entstehenden Beschleunigung erzeugt wird.

**Claims**

**1.** Device for detecting a side impact in a vehicle (10), comprising:

- at least one pressure sensor system (PPS1, PPS2) in at least one side part of the vehicle, wherein the at least one pressure sensor system (PPS1, PPS2) generates a signal
- at least one evaluation circuit ($\mu$C) which detects a side impact as a function of the signal,
- at least one test device for the at least one pressure sensor system (PPS1, PPS2), **characterized in that** the at least one test device is configured in such a way that the at least one test device over-samples the signal and then filters in order to generate a test signal, wherein the test device compares the test signal with a reference value, and detects a functional capability of the at least one pressure sensor system (PPS1, PPS2) as a function of this comparison, **in that** the signal of the pressure sensor system (PPS1, PPS2) is generated by means of an acceleration sensitivity of this pressure sensor system (PPS1, PPS2) on the basis of an acceleration occurring in the driving mode.

2. Device according to Claim 1, **characterized in that** the test device for over-sampling and filtering has at least one sigma-delta converter.

3. Device according to Claim 1 or 2, **characterized in that** a memory is provided in which the reference value is stored.

4. Device according to Claim 1 or 2, **characterized in that** a further sensor system is provided which generates the reference value.

5. Device according to one of the preceding claims, **characterized in that** the at least one pressure sensor system (PPS1, PPS2) has a measuring bridge for generating the signal.

6. Device according to Claim 2, 3, 4 or 5, **characterized in that** the sigma-delta converter is configured to generate a single-bit measurement signal, wherein low-pass and/or bandpass filtering is provided for the single-bit measurement signal.

7. Device according to Claim 6, **characterized in that** the signal is present after the low-pass filtering, and the test signal is present after the bandpass filtering.

8. Pressure sensor **characterized by**:

   - a sensor element which is used to generate a signal,
   - a sigma-delta converter which generates a single-bit measurement signal on the basis of the signal,
   - a low-pass filter and a bandpass filter which filter the single-bit measurement signal in order to generate a test signal,
   - a transmitter module which emits the test signal, and
   - an acceleration sensitivity of the sensor element for generating the signal on the basis of an acceleration occurring in the driving mode.

9. Method for detecting a function capability of the pressure sensor system (PPS1, PPS2) for a vehicle (10) having the following characterizing method steps:

   - making available a signal which was generated by the pressure sensor system (PPS1, PPS2) on the basis of an acceleration sensitivity on the basis of an acceleration occurring in the driving mode,
   - detection of the side impact as a function of the signal,
   - over-sampling of the signal and subsequent filtering in order to generate a test signal, comparison of the test signal with a reference value and detection of a function capability of the pressure sensor system (PPS1, PPS2) as a function of this comparison.

10. Control unit for detecting a side impact for a vehicle (10), comprising:

   - an interface (IF) for making available a signal to at least one pressure sensor system (PPS1, PPS2),
   - at least one evaluation circuit (μC) which detects a side impact as a function of the signal,
   - at least one test device for the at least one pressure sensor system (PPS1, PPS2), **characterized in that** the at least one test device is configured in such a way that the at least one test device over-samples the signal and then filters in order to generate a test signal, wherein the test device compares the test signal with a reference value, and detects a functional capability of the at least one pressure sensor system (PPS1, PPS2) as a function of this comparison, **in that** the signal of the pressure sensor system (PPS1, PPS2) is generated by means of an acceleration sensitivity of this pressure sensor system (PPS1, PPS2) on the basis of an acceleration occurring in the driving mode.

**Revendications**

1. Dispositif de détection de chocs latéraux dans un véhicule (10) comprenant :

   - au moins un capteur de pression (PPS1, PPS2) dans au moins une partie latérale du véhicule, l'au moins un capteur de pression (PPS1, PPS2) générant un signal,
- au moins un circuit d'évaluation ($\mu$C) qui détecte un choc latéral en fonction du signal,
- au moins un dispositif de test destiné à l'au moins un capteur de pression (PPS1, PPS2), **caractérisé en ce que** l'au moins un dispositif de test est configuré de manière à ce que l'au moins un dispositif de test suréchantillonne le signal puis le filtre pour générer un signal de test, le dispositif de test comparant le signal de test à une valeur de référence et détectant l'aptitude au fonctionnement de l'au moins un capteur de pression (PPS1, PPS2) en fonction de cette comparaison, **en ce que** le signal du capteur de pression (PPS1, PPS2) est généré au moyen d'une sensibilité à l'accélération dudit capteur de pression (PPS1, PPS2) sur la base d'une accélération se produisant pendant la conduite.

2. Dispositif selon la revendication 1, **caractérisé en ce que** le dispositif de test comprend au moins un convertisseur sigma-delta pour le suréchantillonnage et le filtrage.

3. Dispositif selon la revendication 1 ou 2, **caractérisé en ce qu'**il est prévu une mémoire dans laquelle est stockée la valeur de référence.

4. Dispositif selon la revendication 1 ou 2, **caractérisé en ce qu'**il est prévu un capteur supplémentaire qui génère la valeur de référence.

5. Dispositif selon l'une quelconque des revendications précédentes, **caractérisé en ce que** l'au moins un capteur de pression (PPS1, PPS2) comprend un pont de mesure destiné à générer le signal.

6. Dispositif selon la revendication 2, 3, 4 ou 5, **caractérisé en ce que** le convertisseur sigma-delta est configuré pour générer un signal de mesure à un bit, un filtrage passe-bas et/ou passe-bande étant prévu pour le signal de mesure à un bit.

7. Dispositif selon la revendication 6, **caractérisé en ce qu'**après le filtrage passe-bas, le signal est obtenu et **en ce qu'**après le filtrage passebande, le signal de test est obtenu.

8. Capteur de pression, **caractérisé par** :

   - un élément capteur qui est utilisé pour générer un signal,
   - un convertisseur sigma-delta qui génère un signal de mesure à un bit sur la base du signal,
   - un filtre passe-bas et un filtre passe-bande qui filtrent le signal de mesure à un bit pour générer un signal de test,
   - un composant émetteur qui émet le signal de test,
   - une sensibilité à l'accélération de l'élément capteur pour générer le signal sur la base d'une accélération se produisant pendant la conduite.

9. Procédé de détection d'une aptitude au fonctionnement d'un capteur de pression (PPS1, PPS2) destiné à un véhicule (10), comprenant les étapes de procédé caractérisantes suivantes :

   - la fourniture d'un signal qui a été généré par le capteur de pression (PPS1, PPS2) du fait d'une sensibilité à l'accélération sur la base d'une accélération se produisant pendant la conduite,
   - la détection du choc latéral en fonction du signal,
   - le suréchantillonnage du signal suivi de son filtrage afin de générer un signal de test, la comparaison du signal de test à une valeur de référence et la détection d'une aptitude au fonctionnement du capteur de pression (PPS1, PPS2) en fonction de cette comparaison.

10. Appareil de commande de détection de choc latéral destiné à un véhicule (10), comprenant :

   - une interface (IF) destinée à fournir un signal d'au moins un capteur de pression (PPS1, PPS2),
   - au moins un circuit d'évaluation ($\mu$C) qui détecte un choc latéral en fonction du signal,
   - au moins un dispositif de test destiné à l'au moins un capteur de pression (PPS1, PPS2), **caractérisé en ce que** l'au moins un dispositif de test est configuré de manière à ce que l'au moins un dispositif de test suréchantillonne le signal puis le filtre pour générer un signal de test, le dispositif de test comparant le signal de test à une valeur de référence et détectant l'aptitude au fonctionnement de l'au moins un capteur de pression (PPS1, PPS2) en fonction de cette comparaison, **en ce que** le signal du capteur de pression (PPS1, PPS2) est généré au moyen d'une sensibilité à l'accélération dudit capteur de pression (PPS1, PPS2) sur la base d'une accélération se produisant pendant la conduite.

**10**     **PPS1**

**B**

IF

µC

IF

**PPS2**

**Fig. 1**

EP 2 051 881 B1

**Fig. 2**

**Fig. 3**

40  41  42  12-14 Bit  43

400 Hz  0,1-10 Hz

ΔP/P  44

**Fig. 4**

46  45

51  50  52  53  54  55

**Fig. 5**

60  61  62  63

+
+
−

D / A

64

**Fig. 6**

**Fig. 7**

**Fig. 8**

**Fig. 9**

**EP 2 051 881 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10210925 A1

- WO 2005012924 A